# FASCICULE DE BREVET EUROPEEN

(11) **EP 0 893 673 B1**
(45) Date de publication et mention de la délivrance du brevet: **11.02.2009**
(21) Numéro de dépôt: 98401828.3
(22) Date de dépôt: 20.07.1998
(51) Int. Cl.: G01F 1/40

(54) **Capteur de débit de gaz et appareil d'assistance respiratoire comportant un tel capteur**
Gasdurchfluss-Sensor und einen solchen Sensor aufweisende Atmungsunterstützungsvorrichtung
Gas flow rate sensor and breathing assisting device using such a sensor

(30) Priorité: 23.07.1997 FR 9709380
(43) Date de publication de la demande: 27.01.1999
(73) Titulaire: ResMed Paris, 77550 Moissy Cramayel (FR)
(72) Inventeur: Chalvignac, Philippe, 77760 Achères-la-Forêt (FR); Mercier, Jean-Philippe, 77170 Brie-comte-Robert (FR)
(74) Mandataire: Texier, Christian

(56) Documents cités:
- EP-A- 0 295 575
- EP-A- 0 428 364
- EP-A- 0 547 617
- DE-A- 2 034 097

## Description

L'invention concerne un capteur de débit de gaz.

L'invention concerne plus particulièrement un capteur de débit de gaz, du type dans lequel deux conduits de prise de pression amont et aval, qui sont reliés chacun à un capteur de pression, débouchent dans un canal d'écoulement du gaz dans lequel un élément perméable s'étend axialement au moins entre des extrémités débouchantes des deux conduits de prise de pression.

Dans de tels capteurs, on mesure la différence de pression entre l'amont et l'aval de l'élément perméable pour en déduire le débit de gaz, l'élément perméable provoquant une perte de charge dans l'écoulement.

De tels capteurs sont notamment utilisés dans des appareils d'assistance respiratoire pour connaître la valeur du débit inspiré ou du débit expiré par un patient.

Dans une telle application, la mesure du débit doit être particulièrement précise pour permettre un fonctionnement optimal de l'appareil d'assistance respiratoire, notamment de manière à assurer au patient un confort d'utilisation satisfaisant.

On connaît de tels capteurs de débit de gaz dans lesquels l'élément perméable est constitué d'un enroulement, autour de l'axe du canal d'écoulement de gaz, d'un empilement de deux feuilles métalliques dont l'une est ondulée.

Ainsi, dans l'enroulement, la feuille ondulée se retrouve prise entre deux portions de la feuille plate de manière à délimiter entre ces deux portions des passages axiaux pour l'écoulement du gaz.

Toutefois, une telle réalisation de l'élément perméable du capteur de débit se révèle particulièrement onéreuse et difficile à mettre en oeuvre. De plus, dans une telle conception du capteur de débit, les extrémités débouchantes des conduits de pression doivent obligatoirement se trouver décalées axialement vers l'amont et vers l'aval par rapport à l'élément perméable. En effet, l'enroulement des deux feuilles de l'élément perméable vient, dans sa dernière spire, en appui contre la surface cylindrique interne du canal d'écoulement dans laquelle débouchent les extrémités des conduits de prise de pression. Aussi, si ces extrémités débouchaient axialement en regard de l'élément perméable, elles se trouveraient en quelque sorte bouchées par les feuilles de l'enroulement de l'élément perméable.

Or, en disposant les extrémités débouchantes des conduits de prise de pression en amont et en aval de l'élément perméable, ces extrémités sont agencées dans des portions du canal d'écoulement des gaz dans lesquelles le flux de gaz peut être particulièrement turbulent, ce qui est nuisible à une bonne qualité des mesures de pression, et donc à une bonne qualité de la mesure du débit.

A cet effet, un capteur de débit de gaz de ce type est décrit dans la demande de brevet européen EP-A-0295575 dans lequel l'élément perméable est réalisé sous la forme d'un corps qui présente en section transversale une forme complémentaire de celle du canal, et qui comporte des fentes s'étendant radialement autour de son axe de manière à déboucher radialement dans une surface latérale externe du corps, et dans lequel les fentes s'étendent axialement sur toute la longueur du corps perméable.

L'invention a pour objet de proposer une nouvelle conception d'un capteur de débit de gaz du type décrit précédemment, et notamment une nouvelle conception de l'élément perméable formant perte de charge qui garantisse une très bonne précision et une très bonne représentativité des mesures de pression effectuées.

Selon l'invention:
- le corps perméable comporte des fentes de profondeurs différentes.

Selon d'autres caractéristiques de l'invention :
- la profondeur des fentes est toujours inférieure au rayon du corps perméable de sorte que ce dernier comporte un noyau central ;
- le noyau central comporte au moins un perçage axial qui le traverse de part en part ;
- le corps perméable comporte au moins un tronçon cylindrique de révolution ;
- les fentes sont délimitées angulairement autour de l'axe du corps perméable par des faces parallèles en vis-à-vis ;
- les fentes sont délimitées angulairement autour de l'axe du corps perméable par des faces d'orientation radiale de telle sorte que les fentes présentent une forme de V en section transversale ;
- le corps perméable comporte une extrémité axiale amont conique pointée vers l'amont ;
- l'une au moins des extrémités axiales du corps perméable est agencée en dehors de l'intervalle axial qui sépare les extrémités débouchantes des deux conduits, et il est prévu des moyens d'indexation angulaire du corps perméable autour de son axe de telle sorte que l'extrémité débouchante du conduit correspondant à ladite extrémité du corps perméable est agencée radialement en regard d'une fente du corps perméable ;
- l'extrémité débouchante d'au moins un des conduits est ramifiée de telle sorte que des ramifications débouchent radialement en regard de fentes de profondeurs différentes ;
- le capteur comporte un corps externe dans lequel est engagée une douille tubulaire qui délimite le canal d'écoulement du gaz, la douille comporte deux séries de perçages radiaux qui débouchent d'une part vers l'intérieur en regard des fentes, et d'autre part vers l'extérieur respectivement dans deux gorges annulaires aménagées dans une surface cylindrique externe de la douille, et le corps externe comporte deux canalisations qui débouchent chacune en regard d'une des gorges et qui sont reliées à des capteurs de pression ;
- le capteur comporte des moyens d'orientation angulaire de la douille par rapport au corps externe de telle sorte que les canalisations du corps externe ne débouchent pas en regard d'un perçage radial de la douille ;
- le capteur comporte des moyens de chauffage du corps perméable ;

L'invention concerne aussi l'utilisation d'un tel capteur pour la mesure d'un débit de gaz inspiré ou expiré par un patient.

L'invention concerne aussi un appareil d'assistance respiratoire, caractérisé en ce qu'il comporte un capteur de débit de gaz présentant l'une quelconque des caractéristiques précédentes.

Selon une autre caractéristique de l'invention:
- le capteur est interposé dans un circuit inspiratoire ou expiratoire de l'appareil d'assistance respiratoire.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée illustrant un capteur de débit de gaz conforme aux enseignements de l'invention ;
- la figure 2 est une vue de côté illustrant à plus grande échelle le corps perméable du capteur de la figure 1 ;
- la figure 3 est une vue du capteur en coupe axiale selon la ligne 3-3 de la figure 4;
- les figures 4 et 5 sont des vues en coupe transversale respectivement selon les lignes 4-4 et 5-5 de la figure 3 ;
- la figure 6 est une vue agrandie d'un détail de la figure 4 ; et
- la figure 7 est une vue en coupe axiale du corps externe du capteur selon l'invention.

On a représenté sur les figures un capteur 10 qui est destiné à mesurer un débit de gaz.

Le capteur 10 comporte ainsi un corps externe 12 qui est percé d'un alésage central débouchant 14 d'axe A1 dans lequel est destinée à être introduite une douille tubulaire 16. Une surface cylindrique interne 18 de la douille 16 limite un canal 20 dans lequel s'écoule le gaz qui entre dans le capteur 10 par un port d'entrée 22 et qui en ressort par un port de sortie 24.

Le capteur de débit 10 qui est ici représenté se présente sous la forme d'un bloc indépendant et autonome entièrement contenu à l'intérieur du corps externe 12.

Toutefois, un tel capteur 10 pourra avantageusement être intégré à un ensemble pneumatique complexe tel que le bloc-soupapes d'un appareil d'assistance respiratoire, le bloc soupapes formant alors le corps externe. Le capteur est alors interposé dans un circuit inspiratoire ou expiratoire de l'appareil pour connaître avec une grande précision les volumes de gaz inspirés ou expirés par le patient.

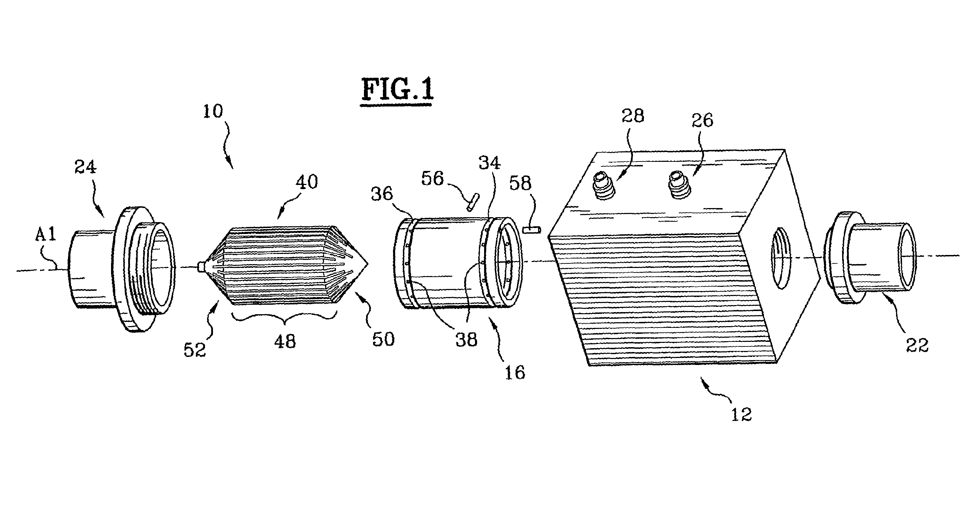

Comme on peut le voir sur les figures 1, 3 et 4, le capteur 10 comporte deux conduits de prise de pression 26, 28 qui débouchent dans le canal d'écoulement des gaz 20 et qui sont destinés chacun à être reliés à un capteur de pression (non représenté).

Plus précisément, chaque conduit 26, 28 comporte une canalisation 30, percée dans le corps principal 12 du capteur 10, et une extrémité débouchante aménagée dans la douille tubulaire 16.

En effet, la douille 16 comporte, dans sa surface latérale cylindrique externe 32, deux gorges annulaires, respectivement amont 34 et aval 36, et, au fond de chacune de ces gorges 34, 36, il est aménagé une série de perçages radiaux 38 qui débouchent radialement vers l'extérieur dans l'une des gorges 34, 36 et radialement vers l'intérieur dans la surface cylindrique interne 18 de la douille 16.

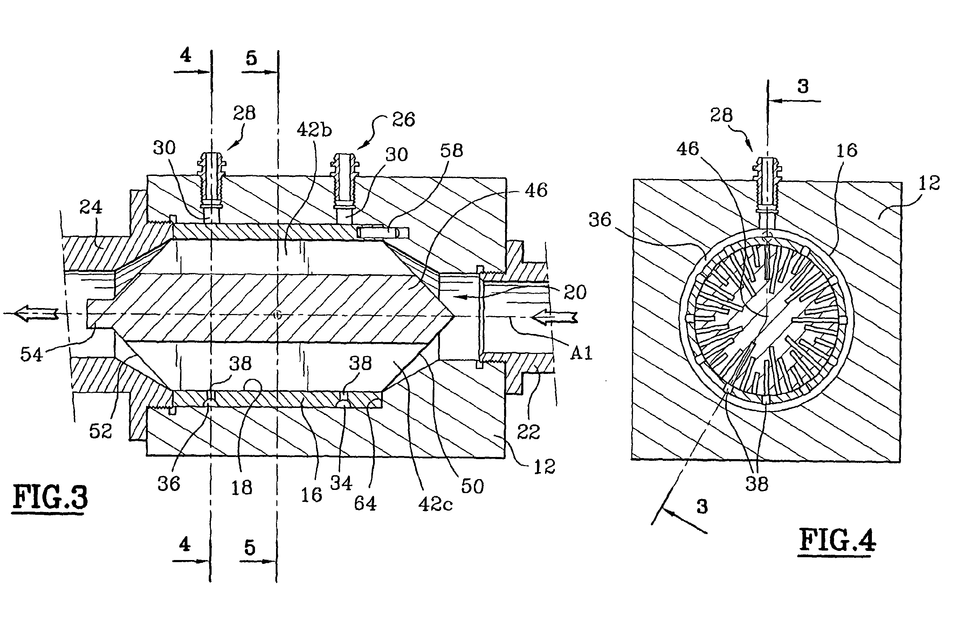

Comme on peut le voir sur la figure 3, lorsque la douille 16 est en place à l'intérieur du corps externe 12, les canalisations 30 de chacun des conduits 26, 28 de prise de pression débouchent axialement en regard des gorges annulaires 34, 36. Ainsi, chacune des gorges 34, 36 forme, avec les orifices 38 correspondants, une extrémité débouchante ramifiée pour chacun des conduits 26, 28.

De manière connue, il est prévu qu'un corps perméable soit engagé dans le canal d'écoulement 20 axialement entre les extrémités débouchantes de chacun des deux conduits 26, 28 de prise de pression.

Selon l'invention, le corps perméable 40 du capteur 10 est réalisé sous la forme d'un corps qui présente un tronçon central cylindrique 48 et deux tronçons d'extrémité coniques, respectivement amont 50 et aval 52, qui sont chacun respectivement pointés vers l'amont et vers l'aval.

Les demi-angles au sommet des tronçons coniques 50, 52 sont par exemple de 45°. Par ailleurs, le tronçon conique aval 52 est pourvu d'un téton cylindrique 54 qui le prolonge axialement vers l'aval.

Le tronçon central 48 présente ainsi, en section transversale, une forme complémentaire de celle du canal d'écoulement 20, c'est-à-dire en l'occurrence une section circulaire de même diamètre que le canal 20.

Par ailleurs, le corps perméable 40 comporte une série de fentes 42 d'orientation radiale qui sont réparties de manière régulière autour de l'axe A1 et qui s'étendent axialement sur toute la longueur du corps perméable 40 dans le but de ménager un passage pour le gaz qui s'écoule au travers du capteur 10.

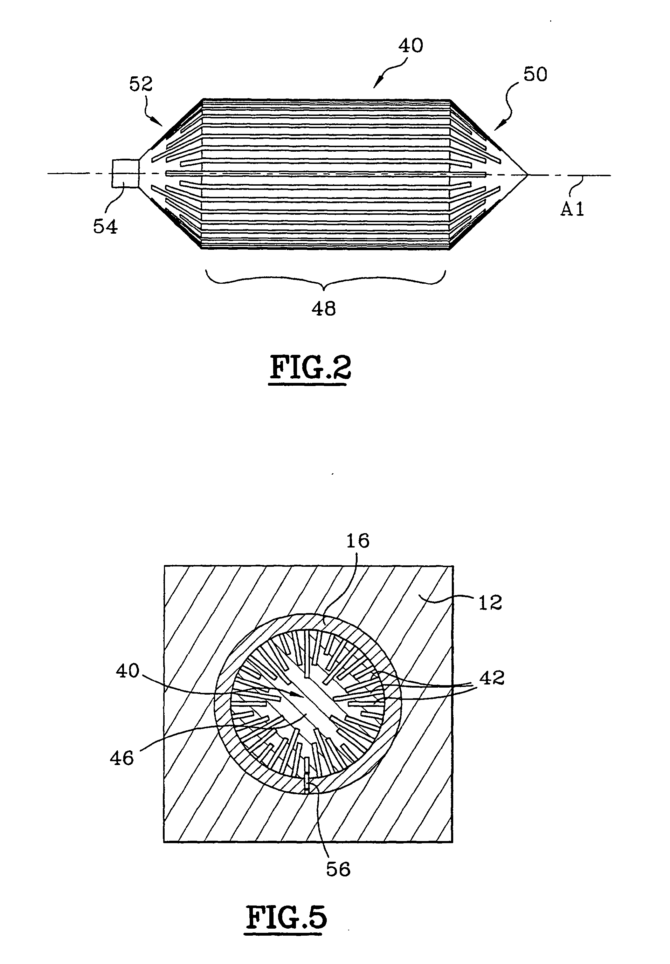

Comme on peut le voir plus particulièrement sur les figures 4, 5 et 6, les fentes 42 débouchent toutes radialement vers l'extérieur dans une surface cylindrique externe 44 du corps perméable 40 mais on peut voir qu'elles présentent des profondeurs radiales différentes.

Ainsi, dans l'exemple de réalisation représenté sur les figures, on peut distinguer trois séries de fentes 42a, 42b, 42c correspondant à trois profondeurs radiales différentes.

Toutefois, la profondeur des fentes 42 n'excède jamais le rayon du corps perméable 40 et cette profondeur est même inférieure à ce rayon de manière à ménager, au centre du corps perméable 40, un noyau axial plein 46 qui en préserve la rigidité.

Pour réduire la perte de charge induite par le corps perméable 38, perte de charge qui est malgré tout nécessaire au principe même de fonctionnement d'un capteur de ce type, on peut prévoir de percer le noyau central 46 d'un ou plusieurs perçages axiaux le traversant de part en part.

Les trois séries de fentes 42a, 42b, 42c sont disposées de telle manière qu'une fente de grande profondeur 42c est encadrée par deux fentes 42b de profondeur moyenne. De même, une fente de faible profondeur 42a est elle aussi encadrée par deux fentes de profondeur moyenne 42b.

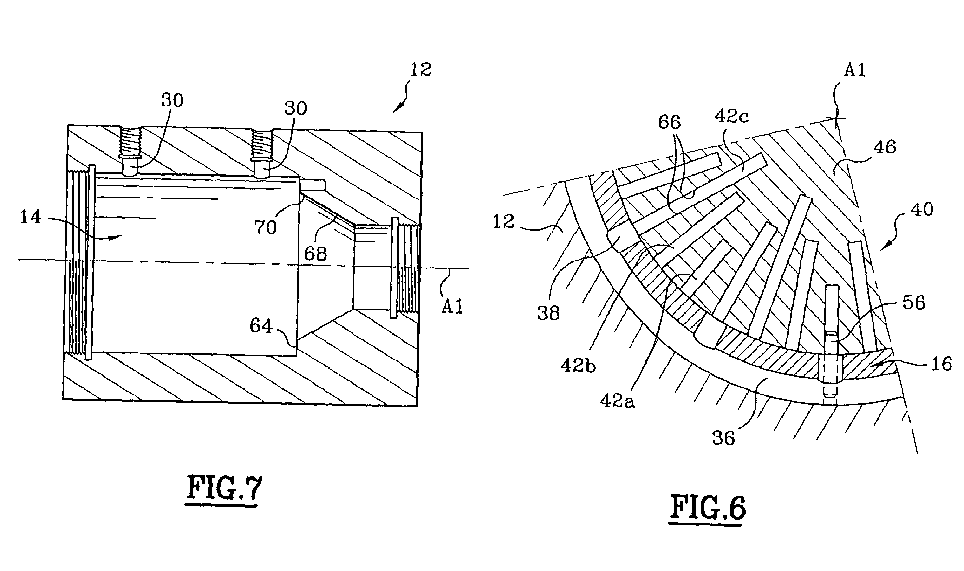

Comme on peut le voir sur la figure 6, les fentes 42 sont des fentes à flancs 66 parallèles. Toutefois, on peut prévoir que les flancs 66 qui les délimitent latéralement soient légèrement inclinés l'un par rapport à l'autre pour donner à la fente 42 une forme de V en section transversale.

Comme on peut le voir sur la figure 3, lorsque le corps perméable 40 est engagé axialement à l'intérieur de la douille 16, elle-même engagée à l'intérieur du corps externe 12, les perçages 38 qui forment les extrémités débouchantes ramifiées des conduits de prise de pression 26, 28 débouchent radialement en regard des fentes 42a, 42b, 42c.

A cet effet, il est prévu des moyens d'indexation angulaire du corps perméable 40 par rapport à la douille 16. A titre d'exemple, ces moyens d'indexation angulaire peuvent être réalisés à l'aide d'une goupille 56 qui est solidaire de la douille 16 et qui s'étend radialement vers l'intérieur de manière à être engagée dans l'une des fentes 42 du corps perméable 40.

Par ailleurs, les perçages 38 de la douille 16 sont répartis angulairement de telle manière que, pour chacun des deux conduits 26, 28, il existe au moins un perçage 38 qui débouche en regard d'une fente de chacune des trois séries de fentes 42a, 42b, 42c de profondeurs différentes.

Comme on peut le voir plus particulièrement sur la figure 4, il est prévu que la douille 16 ne comporte pas de perçage 38 qui débouche en regard de la canalisation 30 correspondante du corps externe 12. A cet effet, un pion d'orientation 58 d'orientation axiale, qui est par exemple solidaire du corps externe 12, est destiné à être engagé dans un trou d'indexation correspondant, lui aussi d'orientation axiale, formé dans une face transversale annulaire d'extrémité amont 62 de la douille 16.

Comme on peut le voir sur la figure 3, la douille 16 est destinée à venir en appui axialement vers l'amont contre une face transversale annulaire d'épaulement 64 de l'alésage 14 du corps externe 12.

Cette face transversale annulaire d'épaulement 64 est prolongée vers l'amont par une surface tronconique 68, pointée vers l'amont et présentant un demi-angle au sommet d'environ 30°.

Ainsi, lorsque le corps perméable 40 est engagé axialement à l'intérieur de la douille 16 et du corps externe 12, il est susceptible de venir en appui axialement vers l'amont par une portion périphérique de son tronçon conique amont 50 contre le bord aval de grand diamètre 70 de la face tronconique 68. La différence de conicité entre le tronçon conique amont 50 et la surface tronconique 68, associée au fait que les fentes 42 débouchent axialement dans les tronçons coniques 50, 52, permet de laisser un passage suffisant pour le gaz qui s'écoule au travers du capteur 10.

Comme on peut le voir sur la figure 3, la longueur axiale du tronçon central 48 du corps perméable 40 est telle qu'il s'étend axialement en amont des perçages radiaux 38 du conduit amont de prise de pression 26 et en aval des perçages radiaux 38 du conduit de prise de position aval 28.

Ainsi, les prises de pression amont et aval sont effectuées dans une zone du capteur 10 dans laquelle le gaz s'écoule à l'intérieur des fentes 42.

Or, grâce à grâce à la conception du corps perméable 40 selon l'invention, le flux des gaz dans les fentes 42 est laminaire ou quasi laminaire, ce qui est favorable à une grande précision des mesures de pression amont et aval, et par conséquent de la mesure de débit susceptible d'être effectuée grâce au capteur 10.

Le corps perméable 40 peut indifféremment être réalisé en matière plastique telle que le "delrin" ou en matériau métallique, par exemple l'aluminium.

Lorsque le capteur de débit 10 est utilisé pour la mesure de volume d'air inspiré ou expiré par un patient, il peut être utile de prévoir des moyens de chauffage du corps perméable 40 afin d'éviter tout risque de condensation de l'air sur ce dernier.

Ce chauffage peut être effectué de diverses manières. On peut choisir de réaliser un chauffage par l'extérieur, c'est-à-dire par l'intermédiaire du corps externe 12, ou l'on peut choisir de le réaliser par l'intérieur, par exemple en disposant une résistance chauffante dans le noyau central 46 du corps perméable 42.

Si le corps perméable 40 est réalisé dans un matériau métallique possédant les propriétés magnétiques adéquates, ce chauffage pourra aussi être réalisé par induction.

Le corps perméable 40 peut être réalisé à partir d'un bloc de départ massif dans lequel les fentes 42 sont taillées à l'aide d'une fraise trois tailles. Toutefois, on peut aussi prévoir de réaliser le corps perméable 40 par moulage, les fentes 42 étant alors réalisées directement venues de matière.

Bien entendu, le nombre de fentes 42 et leur largeur respective peuvent varier en fonction du débit de gaz s'écoulant au travers du capteur 10 et en fonction de la perte de charge que l'on souhaite réaliser à l'aide du corps perméable 40.

## Revendications

1. Capteur de débit de gaz, du type dans lequel deux conduits de prise de pression amont (26) et aval (28), qui sont reliés chacun à un capteur de pression, débouchent dans un canal (20) d'écoulement du gaz dans lequel un élément perméable (40) s'étend axialement au moins entre des extrémités débouchantes (34, 36) des deux conduits de prise de pression (26, 28), du type dans lequel l'élément perméable est réalisé sous la forme d'un corps (40) qui présente en section transversale une forme complémentaire de celle du canal (20), et qui comporte des fentes (42) s'étendant radialement autour de son axe (A1) de manière à déboucher radialement dans une surface latérale externe (44) du corps (40), et du type dans lequel les fentes (42) s'étendent axialement sur toute la longueur du corps perméable (40),
**caractérisé en ce que** le corps perméable (40) comporte des fentes (42a, 42b, 42c) de profondeurs différentes.

2. Capteur de débit de gaz selon la revendication 1, **caractérisé en ce que** la profondeur des fentes (42a, 42b, 42c) est toujours inférieure au rayon du corps perméable (40) de sorte que ce dernier comporte un noyau central (46).

3. Capteur de débit de gaz selon la revendication 2, **caractérisé en ce que** le noyau central (46) comporte au moins un perçage axial qui le traverse de part en part.

4. Capteur de débit de gaz selon l'une quelconque des revendications précédentes, **caractérisé en ce que** le corps perméable (40) comporte au moins un tronçon (48) cylindrique de révolution (44).

5. Capteur de débit de gaz selon l'une quelconque des revendications précédentes, **caractérisé en ce que** les fentes (42) sont délimitées angulairement autour de l'axe (A1) du corps perméable (40) par des faces parallèles (60) en vis-à-vis.

6. Capteur de débit de gaz selon l'une quelconque des revendications 1 à 4, **caractérisé en ce que** les fentes (42) sont délimitées angulairement autour de l'axe du corps perméable par des faces d'orientation radiale de telle sorte que les fentes présentent une forme de V en section transversale.

7. Capteur de débit de gaz selon l'une quelconque des revendications précédentes, **caractérisé en ce que** le corps perméable (40) comporte une extrémité axiale amont conique (50) pointée vers l'amont.

8. Capteur de débit de gaz selon l'une quelconque des revendications précédentes, **caractérisé en ce que** l'une au moins des extrémités axiales (50, 52) du corps perméable (40) est agencée en dehors de l'intervalle axial qui sépare les extrémités débouchantes (34, 36, 38) des deux conduits (26, 28), et **en ce qu'**il est prévu des moyens d'indexation angulaire (56) du corps perméable (40) autour de son axe (A1) de telle sorte que l'extrémité débouchante (38) du conduit (26, 28) correspondant à ladite extrémité (50, 52) du corps perméable (40) est agencée radialement en regard d'une fente (42) du corps perméable (40).

9. Capteur de débit de gaz selon la revendication 8, **caractérisé en ce que** l'extrémité débouchante (34, 36) d'au moins un des conduits (26, 28) est ramifiée de telle sorte que des ramifications (38) débouchent radialement en regard de fentes (42a, 42b, 42c) de profondeurs différentes.

10. Capteur de débit de gaz selon l'une quelconque des revendications précédentes, **caractérisé en ce qu'**il comporte un corps externe (12) dans lequel est engagée une douille tubulaire (16) qui délimite le canal (20) d'écoulement du gaz, **en ce que** la douille (16) comporte deux séries de perçages radiaux (38) qui débouchent d'une part vers l'intérieur en regard des fentes (42), et d'autre part vers l'extérieur respectivement dans deux gorges annulaires (34, 36) aménagées dans une surface cylindrique externe (32) de la douille (16), et **en ce que** le corps externe (12) comporte deux canalisations (30) qui débouchent chacune en regard d'une des gorges (34, 36) et qui sont reliées à des capteurs de pression.

11. Capteur de débit de gaz selon la revendication 10, **caractérisé en ce qu'**il comporte des moyens (58) d'orientation angulaire de la douille (16) par rapport au corps externe (12) de telle sorte que les canalisations (30) du corps externe (12) ne débouchent pas en regard d'un perçage radial (38) de la douille (16).

12. Capteur de débit de gaz selon l'une quelconque des revendications précédentes, **caractérisé en ce qu'**il comporte des moyens de chauffage du corps perméable (40).

13. Utilisation d'un capteur de débit de gaz selon l'une quelconque des revendications précédentes, pour la mesure d'un débit de gaz inspiré ou expiré par un patient.

14. Appareil d'assistance respiratoire, **caractérisé en ce qu'**il comporte un capteur de débit de gaz selon l'une quelconque des revendications 1 à 12.

15. Appareil d'assistance respiratoire selon la revendication 14, **caractérisé en ce que** le capteur de débit de gaz est interposé dans un circuit inspiratoire ou expiratoire.

## Claims

1. Gas flow sensor, of the type wherein two upstream (26) and downstream (28) pressure tapping conduits, which are each connected to a pressure sensor, open into a gas flow channel (20) wherein a permeable element (40) extends axially at least between open ends (34, 36) of the two pressure tapping conduits (26, 28) of the type wherein the permeable element is made in the form of a body (40) which has in the cross-section thereof a complementary shape to that of the channel (20), and which comprises slots (42) extending radially about the axis (A1) so as to open radially in an external lateral surface (44) of the body (40), and of the type wherein the slots (42) extend axially over the entire length of the permeable body (40),
**characterised in that** the permeable body (40) comprises slots (42a, 42b, 42c) of different depths.

2. Gas flow sensor according to claim 1, **characterised in that** the depth of the slots (42a, 42b, 42c) is always less than the radius of the permeable body (40) such that said body comprises a central core (46).

3. Gas flow sensor according to claim 2, **characterised in that** the central core (46) comprises at least one axial hole passing from one end to the other thereof.

4. Gas flow sensor according to any of the above claims, **characterised in that** the permeable body (40) comprises at least one cylindrical revolution (44) section (48).

5. Gas flow sensor according to any of the above claims, **characterised in that** the slots (42) are delimited angularly about the axis (A1) of the permeable body (40) by parallel faces (60) opposite each other.

6. Gas flow sensor according to any of claims 1 to 4, **characterised in that** the slots (42) are delimited angularly about the axis of the permeable body by radially oriented faces such that the slots display a V shape in the cross-section thereof.

7. Gas flow sensor according to any of the above claims, **characterised in that** the permeable body (40) comprises a conical upstream axial end (50) pointing upstream.

8. Gas flow sensor according to any of the above claims, **characterised in that** at least one of the axial ends (50, 52) of the permeable body (40) is arranged outside the axial interval separating the open ends (34, 36, 38) of the two conduits (26, 28), and **in that** angular indexing means (56) of the permeable body (40) are provided about the axis (A1) thereof such that the open end (38) of the conduit (26, 28) corresponding to said end (50, 52) of the permeable body (40) is arranged radially opposite a slot (42) of the permeable body (40).

9. Gas flow sensor according to claim 8, **characterised in that** the open end (34, 36) of at least one of the conduits (26, 28) is branched such that branches (38) open radially opposite the slots (42a, 42b, 42c) of different depths.

10. Gas flow sensor according to any of the above claims, **characterised in that** it comprises an external body (12) wherein a tubular bushing (16) which delimits the gas flow channel (20) is engaged, **in that** the bushing (16) comprises two series of radial holes (38) which open, on one hand, inwards opposite the slots (42) and, on the other, outwards respectively in two annular grooves (34, 36) provided in an external cylindrical surface area (32) of the bushing (16), and **in that** the external body (12) comprises two ducts (30) which each open opposite one of the grooves (34, 36) and which are connected to pressure sensors.

11. Gas flow sensor according to claim 10, **characterised in that** it comprises angular orientation means (58) of the bushing (16) with respect to the external body (12) such that the ducts (30) of the external body (12) do not open opposite a radial hole (38) of the bushing (16).

12. Gas flow sensor according to any of the above claims, **characterised in that** it comprises heating means of the permeable body (40).

13. Use of a gas flow sensor according to any of the above claims, to measure a gas flow rate inhaled or exhaled by a patient.

14. Respiratory assistance apparatus, **characterised in that** it comprises a gas flow sensor according to any of claims 1 to 12.

15. Respiratory assistance apparatus according to claim 14, **characterised in that** the gas flow sensor is inserted in an inspiratory or expiratory circuit.

## Patentansprüche

1. Gasdurchfluss-Sensor des Typs, in dem zwei Leitungen zur Aufwärts- (26) und Abwärts-Druckaufnahme (28), die jeweils mit einem Drucksensor verbunden sind, in einen Kanal (20) zur Strömung des Gases münden, in dem sich ein durchlässiges Element (40) zumindest zwischen den Mündungsenden (34, 36) der beiden Leitungen zur Druckaufnahme (26, 28) axial erstreckt, des Typs, in dem das durchlässige Element in Form eines Körpers (40) aufgebildet ist, der im Querschnitt eine zusätzliche Form zu derjenigen des Kanals (20) aufweist und der Schlitze (42) umfasst, die sich derart radial um seine Achse (A1) erstrecken, dass sie radial in eine externe seitliche Fläche (44) des Körpers (40) münden, und des Typs, in dem sich die Schlitze (42) über die gesamte Länge des durchlässigen Körpers (40) axial erstrecken,
**dadurch gekennzeichnet, dass** der durchlässige Körper (40) Schlitze (42a, 42b, 42c) mit verschiedenen Tiefen umfasst.

2. Gasdurchfluss-Sensor nach Anspruch 1, **dadurch gekennzeichnet, dass** die Tiefe der Schlitze (42a, 42b, 42c) immer kleiner als der Radius des durchlässigen Körpers (40) ist, so dass dieser einen zentralen Kern (46) umfasst.

3. Gasdurchfluss-Sensor nach Anspruch 2, **dadurch gekennzeichnet, dass** der zentrale Kern (46) zumindest eine axiale Durchbohrung, die ihn von einer zur anderen Seite durchquert, umfasst.

4. Gasdurchfluss-Sensor nach einem der vorhergehenden Ansprüche, **dadurch gekennzeichnet, dass** der durchlässige Körper (40) zumindest einen zylindrischen Abschnitt (48) zur Drehung (44) umfasst.

5. Gasdurchfluss-Sensor nach einem der vorhergehenden Ansprüche, **dadurch gekennzeichnet, dass** die Schlitze (42) winklig um die Achse (A1) des durchlässigen Körpers (40) anhand von gegenüber liegenden parallelen Seiten (60) begrenzt sind.

6. Gasdurchfluss-Sensor nach einem der Ansprüche 1 bis 4, **dadurch gekennzeichnet, dass** die Schlitze (42) winklig um die Achse des durchlässigen Körpers anhand von radialen Seiten begrenzt sind, so dass die Schlitze im Querschnitt eine V-Form aufweisen.

7. Gasdurchfluss-Sensor nach einem der vorhergehenden Ansprüche, **dadurch gekennzeichnet, dass** der durchlässige Körper (40) ein konisches axiales Aufwärtsende (50) umfasst, das aufwärts zeigt.

8. Gasdurchfluss-Sensor nach einem der vorhergehenden Ansprüche, **dadurch gekennzeichnet, dass** zumindest eines der axialen Enden (50, 52) des durchlässigen Körpers (40) außerhalb des axialen Abstands angeordnet ist, der die Mündungsenden (34, 36, 38) von den beiden Leitungen (26, 28) trennt, und **dadurch**, dass derart Mittel zur Winkelindizierung (56) des durchlässigen Körpers (40) um seine Achse (A1) vorgesehen sind, dass das Mündungsende (38) der Leitung (26, 28), das dem genannten Ende (50, 52) des durchlässigen Körpers (40) entspricht, radial gegenüber einem Schlitz (42) des durchlässigen Körpers (40) angeordnet ist.

9. Gasdurchfluss-Sensor nach Anspruch 8, **dadurch gekennzeichnet, dass** das Mündungsende (34, 36) von zumindest einer der Leitungen (26, 28) derart verzweigt ist, dass Verzweigungen (38) radial gegenüber von Schlitzen (42a, 42b, 42c) mit verschiedenen Tiefen münden.

10. Gasdurchfluss-Sensor nach einem der vorhergehenden Ansprüche, **dadurch gekennzeichnet, dass** er einen externen Körper (12) umfasst, in den eine Rohrfassung (16) eingefügt ist, die den Kanal (20) zur Strömung des Gases abgrenzt, **dadurch** dass die abgrenzt Fassung (16) zwei Serien radialer Durchbohrungen (38) umfasst, die einerseits nach Innen gegenüber von Schlitzen (42) münden, und andererseits nach Außen jeweils in zwei Ringnuten (34, 36), die in einer externen zylindrischen Oberfläche (32) der Fassung (16) vorgesehen sind, und **dadurch**, dass der externe Körper (12) zwei Rohrleitungen (30) umfasst, die jeweils gegenüber einem der Nuten (34, 36) münden und die an Drucksensoren angeschlossen sind.

11. Gasdurchfluss-Sensor nach Anspruch 10, **dadurch gekennzeichnet, dass** er derart Mittel (58) zur Winkelorientierung der Fassung (16) im Verhältnis zum externen Körper (12) umfasst, dass die Rohrleitungen (30) des externen Körpers (12) nicht gegenüber einer radialen Durchbohrung (38) der Fassung (16) münden.

12. Gasdurchfluss-Sensor nach einem der vorhergehenden Ansprüche, **dadurch gekennzeichnet, dass** er Mittel zum Heizen des durchlässigen Körpers (40) umfasst.

13. Verwendung eines Gasdurchfluss-Sensors nach einem der vorhergehenden Ansprüche, zur Messung eines von einem Patienten ein- oder ausgeatmeten Gasdurchflusses.

14. Atmungsunterstützungsvorrichtung, **dadurch gekennzeichnet, dass** sie einen Gasdurchfluss-Sensor nach einem der Ansprüche 1 bis 12 umfasst.

15. Atmungsunterstützungsvorrichtung nach Anspruch 14, **dadurch gekennzeichnet, dass** der Gasdurchfluss-Sensor in einen Einatmungs- oder Ausatmungskreis integriert ist.
